# Europäisches Patentamt
## European Patent Office
## Office européen des brevets

(19)

(11) Veröffentlichungsnummer: **0 024 463**
**B1**

(12) **EUROPÄISCHE PATENTSCHRIFT**

(45) Veröffentlichungstag der Patentschrift: **02.05.84**

(21) Anmeldenummer: **80100146.2**

(22) Anmeldetag: **12.01.80**

(51) Int. Cl.³: **C 03 B 5/235, C 03 B 5/027**

---

(54) Verfahren zum gleichmässigen Beheizen eines Glasstromes in einem Speiser und Einrichtung zur Durchführung dieses Verfahrens.

---

(30) Priorität: **01.09.79 DE 2935416**

(43) Veröffentlichungstag der Anmeldung:
**11.03.81 Patentblatt 81/10**

(45) Bekanntmachung des Hinweises auf die Patenterteilung:
**02.05.84 Patentblatt 84/18**

(84) Benannte Vertragsstaaten:
**AT BE CH FR IT NL SE**

(56) Entgegenhaltungen:
**DE - A - 2 626 798**
**DE - A - 2 712 249**
**DE - C - 2 461 700**
**US - A - 3 836 689**

(73) Patentinhaber: **Sorg GmbH & Co. KG**
**Im Aller 23 Postfach 520**
**D-8770 Lohr/Main (DE)**

(72) Erfinder: **Sims, Richard**
**Steinweg 6**
**D-8770 Lohr-Steinbach (DE)**

(74) Vertreter: **Schulze Horn, Stefan, Dipl.-Ing. et al,**
**Patentanwälte Dipl.-Ing. S. Schulze Horn M.SC.**
**Dr. H. Hoffmeister Goldstrasse 36**
**D-4400 Münster (DE)**

---

Courier Press, Leamington Spa, England.

**Verfahren zum gleichmässrigen Beheizen eines Glasstromes in einem Speiser und Einrichtung zur Durchführung dieses Verfahrens**

Die Erfindung betrifft ein Verfahren zum gleichmäßigen Beheizen eines Glasstromes in einem Speiser eines Glasofens, bei welchem die Energie durch in das Glasbad eintauchende Elektroden zugeführt wird und die Temperatur des Glasstromes fortlaufend gemessen wird und eine Einrichtung zur Durchführung dieses Verfahrens mit Elektroden, die paarweise beidseitig die Wandung des Speisers durchdringen und mit Wicklungen von Transformatoren leiten verbunden sind und mit Temperaturmeßelementen zur Bestimmung der Temperatur des Glasstromes mindestens im Eingangsbereich des Speisers.

Es ist bereits bekannt, die waagerecht durch die Kanalseitenwand ragenden Elektroden in Gruppen zu schalten, die als Heizzonen benannt werden können. Dabei werden die Elektroden parallel an den Sekundärteil eines Transformators angeschlossen, wobei für die Heizzone die Elektroden gemeinsam über einen Spannungsregler (Thyristor oder Stelltransformator) geregelt werden. Die Elektroden an der einen Speiserseite sind dabei elektrisch mit der einen Ausgangsseite des Sekundärteils des Transformators verbunden und die der anderen Seite mit der anderen Seite des Sekundärteils des Transformators, welcher in bekannter Art ein Stelltransformator sein kann. Derartige Systeme, wie sie z.B. in der US - A - 4 029 488 beschrieben werden, weisen aber den Nachteil auf, daß zwischen den Elektrodenpaaren jeder Heizzone die gleiche Spannung besteht, obwohl innerhalb des Glasstroms verschiedene Widerstände vorliegen und dadurch verschiedene Leistungsaufnahmen erfolgen. Es ist daher nicht möglich, Temperaturinhomogenitäten in dem Glasstrom in optimaler Weise auszugleichen.

Es ist weiterhin bekannt (DE - A - 2 626 798) zur gleichmäßigen Erhitzung von geschmolzenem Glas die Elektrodenpaare an Stromquellen in Form von Transformatoren anzuschließen, deren Primärwicklungen in Reihe geschaltet sind und bei denen jede Sekundärwicklung leitend mit einem Elektrodenpaar verbunden ist. Dieses System ermöglicht es zwar, durch die Verknüpfung der Leistungun aller Elektrodenpaare die Leistungsaufnahme zwischen jedem Elektrodenpaar gleich einzustellen; nachteilig ist bei diesem bekannten System aber, daß eine Regelung der Leistung einzelner Elektrodenpaare nicht möglich ist und der Ausgleich von Temperaturschwankungen dadurch nur begrenzt erfolgen kann. Gerade dann, wenn eine Regelung aufgrund einer sofortigen unerwünschten Temperaturabweichung erfolgen sollte, wird also eine zu große Korrektur und damit eine Verschlechterung vorgenommen.

Da Temperaturmeßelemente meist nur mit Zeitverzögerung ansprechen, ist auch über den Einsatz solcher Elemente und bei dem Einsatz der bekannten, manuell einstellbaren Regeltransformatoren eine Lösung der auftretenden Probleme nicht zufriedenstellend möglich.

Weiterhin nachteilig ist bei den bekannten Regelsystemen bzw. Speiserbeheizungen, daß mit direkter Beheizung mittels, Elektroden die thermische Homogenität zwangsweise unvollkommen sein muß, da eine Leistungskonzentration an den Spitzen der Elektroden auftritt und der Stromfluß weiterhin durch heißere Regionen erfolgt, da dort geringere Widerstände vorliegen. Eine Aufheizung der kühleren Stellen ist daher nur in unzureichendem Maße möglich, die erwünschte vollkommene Temperaturhomogenität ist daher systembedingt nur unvollkommen erreichbar.

Aus der US - A - 3 836 689 ist zudem ein Verfahren zum gleichmäßigen Beheizen eines Glasstromes in einem Glasofen bekannt, bei welchem die Energie durch in das Glasbad eintauchende Elektroden zugeführt und die Temperatur des Glasstromes fortlaufend gemessen wird und bei welchem der zwischen zusammenwirkenden Elektroden fließende Strom unabhängig von dem durch das Glasbad gegebenen Widerstand durch Regelung der Spannung konstant gehalten wird, solange die Temperatur des Glasstromes nicht um ein vorher bestimmtes Maß von einem Sollwert abweicht, und bei dem ferner nach Überschreiten der zulässigen Abweichung der Stromfluß mindestens einer Anzahl von am Speisereingang angeordneten Elektroden zum Ausgleich der Temperaturabweichung geragelt wird.

Für den Fachmann ersichtlich sind derartige Maßnahmen aber nicht ohne weiteres auf die Auslegung eines Speisers übertragbar.

Es ist dem gegenüber Aufgabe der Erfindung, ein Verfahren und eine Einrichtung zur Beheizung eines Glasstromes in einem Speiser eines Glasofens zu schaffen, welchem die vorgenannten Nachteile nicht mehr anhaften und bei welchem es möglich ist, auch bei Temperaturschwankungen des den Speiser durchströmenden Glases eine größtmögliche Temperaturhomogenität zu erzielen, so daß die Qualität des ausfließenden Glases optimal ist. Die erfindungsgemäße Lösung soll nicht nur eine gleichmäßige Temperaturverteilung über den Querschnitt des ausfließenden Glases ermöglichen, sondern bei Schwankungen im Ofenbetrieb darüber hinaus die Einhaltung der gewünschten Glastemperatur sicher und bei vertretbarem Aufwand gewährleisten.

Diese Aufgabe wird erfindungsgemäß dadurch gelöst, daß der zwischen zusammenwirkenden Elektroden paarenfließende Strom unabhängig von dem durch das Glasbad gegebenen Widerstand durch Regelung der Spannung konstant gehalten wird, solange die Temperatur des Glasstromes nicht um ein vorher bestimmtes Maß von einem Sollwert abweicht, und daß nach Überschreiten der zulässigen Abweichung der Stromfluß mindestens einer Anzahl von am Speisereingang angeordneten Elektroden paaren zum Ausgleich der Temperaturabweichung geregelt wird, wobei die Stromzuführung zu diesen regelbaren Elektrodenpaaren in einem festen, auch während einer Regelphase nicht geänderten Verhältnis zueinander erfolgten.

Zur Vereinfachung und zur besseren Wirtschaftlichkeit kann der Stromfluß der hinter dem Speisereingang angeordneten Elektroden gemeinsam in Abhängigkeit von der gewünschten Temperatur geregelt werden, wobei die Elektroden parallel geschaltet sind.

Zur Vergleichmäßigung der Temperatur des Glases vor dessen Ausfließen aus dem Speiser und insbesondere zur Aufheizung kühlerer Stellen in dem Glasstrom kann vordem und am Auslaß des Speisers elektrischer Strom in das Feuerfestmaterial des Speisers eingeleitet werden und fließt dann teils in dem Feuerfestmaterial und teils in dem Glasbad.

Die Einrichtung zur Durchführung des erfindungsgemäßen Verfahrens kennzeichnet sich dadurch, daß die Elektroden jedes Paares mindestens im Eingangsbereich des Speisers mit dem Ausgang der Sekundärwicklung eines regelbaren Transformators verbunden sind, wobei die Spannungen der Transformatoren einer Anzahl benachbarter Elektrodenpaare untereinander ein festes Verhältnis aufweisen, welches auch in der Regelphase nicht geändert wird und daß primärseitig mit jedem Transformator ein Stromregler verbunden ist.

Vorteilhaft sind die Elektroden, die hinter dem Eingangsbereich des Speisers angeordnet sind, parallel geschaltet und mit der Sekundärseite eines Transformators verbunden, wobei vor dem und am Auslaß des Speisers eine Anzahl von paarweise angeordneten Kontakten vorhanden sein kann, die an das Feuerfestmaterial des Speisers angedrückt werden und wobei jedes Kontaktpaar mit der Sekundärseite eines Transformators leitend verbunden ist.

In einer alternativen Ausgestaltung können auch die an dem Feuerfestmaterial anliegenden Kontakte parallel geschaltet mit der Sekundärseite eines Transformators verbunden sein, wobei sie Mittel zur Abschaltung aufweisen, wenn zwischen einem Kontaktpaar ein höherer als vorher bestimmter Stromfluß vorliegt.

Im folgenden wird ein Ausführungsbeispiel der Erfindung anhand von Zeichnungen näher beschrieben. Es zeigen:

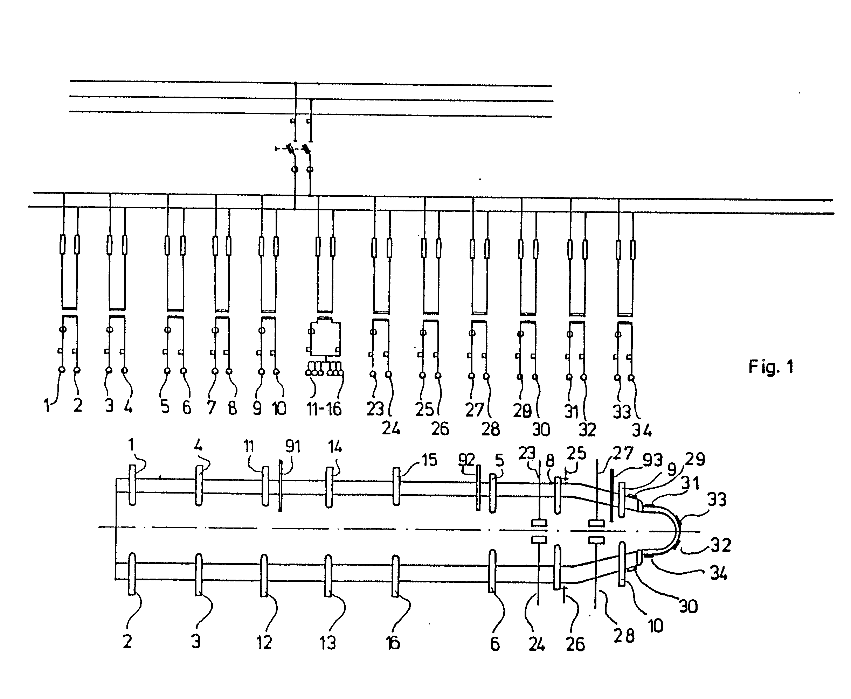

Figur 1 das Blockschaltbild einer Speiserbeheizung gemäß der Erfindung sowie schematisch die Elektroden- und Kontaktanordnung in Verbindung mit dem Blockschaltbild,

Figure 2 schematisch ein Blockschaltbild der Kaskaden-regelung der im Eingangsbereich des Speisers angeordneten Elektroden einschließlich der Temperaturregelund und.

Figur 3 schematisch ein Blockschaltbild der hinter dem Speisereingangsbereich alternativ angeordneten, parallel geschalteten Elektroden.

Gemäß den Zeichnungen sind im Speiser eine Anzahl von Elektroden 1—10, 23—28 vorhanden, bei denen jeweils ein Paar elektrisch leitend mit den Ausgängen einer Sekundärspule eines Regeltransformators verbunden sind und wobei über eine Stromregelung der von jedem Elektrodenpaar aufgenommene Strom konstant gehalten wird, solange die Temperaturabweichungen ein gewisses Maß nicht überschreiten. Temperaturmeßdetektoren 91—93 messen die Temperatur des Glases innerhalb des Speisers und verstellen über leistungsbegrenzende Thyristoren die von den Elektroden abgegebene Leistung bei überschreiten einer gewissen, einstellbaren Abweichung.

Die Elektroden sind weiterhin in Heizzonen zusammengefaßt und innerhalb jeder Heizzone ist die Leistungsaufnahme zwischen benachbarten Elektrodenpaaren im festen Verhältnis eingestellt und die Regelund erfolgt für alle Elektroden einer Heizzone gemeinsam.

Es wird also über die Stromregelung für jedes Elektrodenpaar oder für jeweils zwei nebeneinander angeordnete Elektrodenpaare eine konstante Leistung eingestellt, die in einem festen Verhältnis zu den benachbarten Elektrodenpaaren leigt. Bei Überschreiten von Temperaturabweichungen wird dann für die gesamte Heizzone das Leistungsniveau angehoben, wenn die gemessene Temperatur zu gering ist und abgesenkt, wenn die gemessene Temperatur zu hoch ist. Es wird dadurch erreicht, daß unabhängig von der Temperatur des Glases gerade zwischen zwei Elektroden eines Paares jeder Bereich die notwendige Energie zugeführt erhält und die Glastemperatur über den temperaturabhängigen Widerstand keinen Einfluß mehr auf die in das Glas eingegebene Energie und deren Verteilung mehr hat.

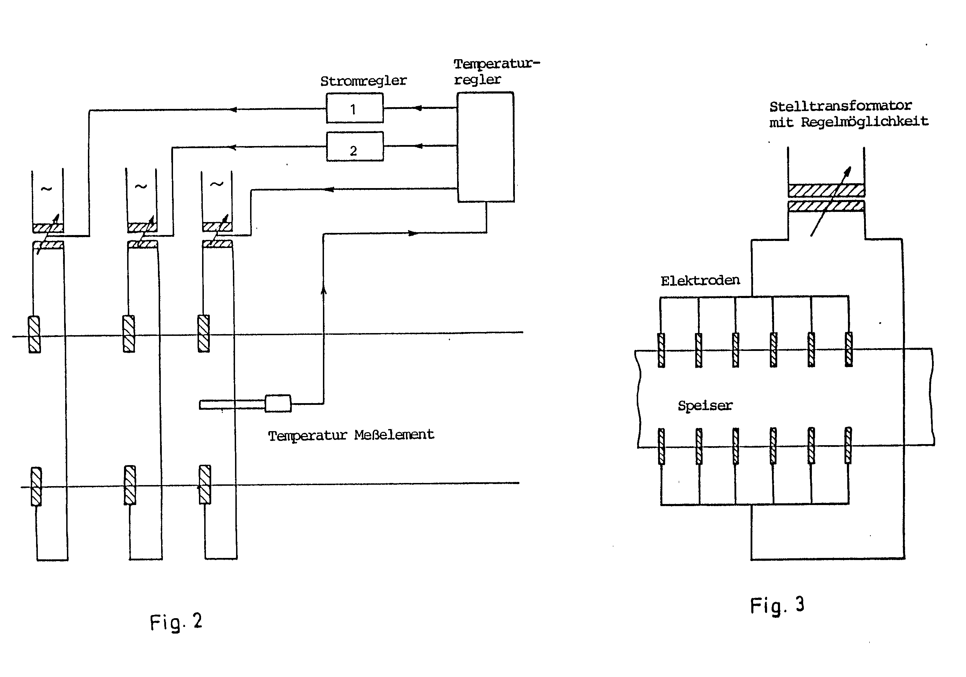

Zur Verringerung des technischen Aufwandes können hinter dem Eingangsbereich eine Anzahl von Elektroden 11—16 angeordnet sein, die parallel geschaltet sind und wobei jede Gruppe der Elektroden einer Heizzone mit dem Ausgang des Sekundärteils eines Regeltransformators verbunden ist (Figur 3). Auch für diese Schaltungsanordnung kann mit Hilfe von Thyristoren im Wege einer Stromregelung die Leistungsaufnahme durch das Glasbad konstant gehalten werden, indem bei sich erhöhendem Stromfluß die Spannung entsprechend abgesenkt wird, bzw. bei verringerndem Stromfluß angehoben wird. Alternativ kann aber auch in dem Mittelbereich des Speisers eine Schaltung angewendet werden, wie sie für den Eingangsbereich beschrieben wurde, d. h. jedes Elektrodenpaar weist für sich eine Stromregelung auf und die Regelung der Leistung erfolgt in Abhängigkeit von einer Temperaturmessung, wobei nebeneinanderliegende Elektroden in einem festen Verhältnis zueinander die Leistung in das Glasbad abgeben.

Um die Homogenität des Glasses am Speiserausgang noch weiter zu erhöhen, sind dort eine Anzahl von Kontakten 25—34 vorhanden, welche an das Feuerfestmaterial des Speisers federnd angedrückt sind und wobei jedes Kontaktpaar mit dem Ausgang der Sekundärspule eines Regeltransformators verbunden ist. Auch für diese Transformatoren ist eine Stromregelung vorhanden, so daß die Überhitzung des Feuerfestmaterial im Bereich zwischen zwei Kontakten mit Sicherheit vermieden wird. Alternativ dazu kann auch eine Abschaltung jedes Heizkreises durch das Feuerfestmaterial erfolgen, wenn die Stromaufnahme in einem Kreis zu groß wird. Eine entsprechende Speiserbeheizung ist in der DE C - 2 461 700 mäher beschrieben, so daß auf eine detailliertere Darstellung verzichtet werden kann. Von den Kontakten fließt ein Strom durch das Feuerfestmaterial, welches bei hohen Temperaturen leitend ist oder durch Zusätze bei hohen Temperaturen leitend gemacht wurde und der Stromfluß erfolgt, jetzt zum einen durch das Feuerfestmaterial direkt und zum anderen auch durch das Glas, welches in Kontaktnähe innerhalb des Speisers geführt wird. Dadurch ist es möglich, auch sonst unzugängliche Bereiche des Glasstromes ausreichend zu beheizen, ohne daß Energiekonzentrationen innerhalb des Glases gebildet werden, die ihrerseits wieder für Temperatur-Inhomogenitäten sorgen würden. Es ist daher möglich, ein vollkommen temperatur-homogenes Glas zu erzeugen, wobei diese Homogenität in größerem Maße im Bereich des Speiserausgangs eingestellt wird, während der Ausgleich von Temperaturschwankungen des in den Speiser einfließenden Glases in größerem Maße am Eingang des Speisers in der beschriebenen Weise vorgenommen wird.

Da gemäß der Erfindung mit handelsüblichen Bauteilen, nämlich Thyristoren, Transformatoren und Temperaturmeßfühlern, d.h. Pyrometern, bzw. Thermoelementen gearbeitet wird, ist die erfindungsgemäße Einrichtung nicht nur besonders effizient, sondern auch betriebssicher und es kann daher von einer idealen Lösung der anstehenden Probleme gesprochen werden.

## Patentansprüche

1. Verfahren zum gleichmäßigen Beheizen eines Glasstromes in einem Speiser eines Glasofens, bei welchem die Energie durch in das Glasbad eintauchende Elektroden zugeführt wird, und die Temperatur des Glasstromes fortlaufend gemessen wird, dadurch gekennzeichnet, daß der zwischen zusammen-wirkenden Elektrodenpaaren fließende Strom unabhängig von dem durch das Glasbad gegebenen Widerstand durch Regelung der Spannung konstant gehalten wird, solange die Temperatur des Glasstromes nicht um ein vorher bestimmtes Maß von einem Sollwert abweicht, und daß nach Überschreiten der zulässigen Abweichung der Stromfluß mindestens einer Anzahl von am Speisereingang angeordneten Elektrodenpaaren zum Ausgleich der Temperaturabweichung geregelt wird, wobei die Stromzuführung zu diesen regelbaren Elektrodenpaaren in einem festen, auch während einer Regelphase nicht geänderten Verhältnis zueinander erfolgt.

2. Verfahren nach Anspruch 1, dadurch gekennzeichnet, daß der Stromfluß von hinter dem Speisereingang angeordneten Elektroden gemeinsam in Abhängigkeit von der gewünschten Temperatur geregelt wird.

3. Verfahren nach Anspruch 1 oder 2, dadurch gekennzeichnet, daß mindestens vordem und am Auslaß des Speisers elektrischer Strom in das Feuerfest-Material des Speisers eingeleitet wird und in diesem fließt.

4. Einrichtung zur Durchführung des Verfahrens nach Anspruch 1—3 mit Elektroden, die paarweise beidseitig die Wandung des Speisers durchdringen und mit Wicklungen von Transformatoren leitend verbunden sind, und mit Temperaturmeßelementen zur Bestimmung der Temperatur des Glasstromes mindestens im Eingangsbereich des Speisers, dadurch gekennzeichnet, daß die Elektroden jedes Paares mindestens im Eingangsbereich des Speisers mit dem Ausgang der Sekundärwicklung eines regelbaren Transformators verbunden sind, wobei die Spannungen der Transformatoren einer Anzahl benachbarter Elektrodenpaare untereinander ein festes Verhältnis aufweisen, welches auch in der Regelphase nicht geändert wird und daß primärseitig mit jedem Transformator ein Stromregler verbunden ist.

5. Einrichtung nach Anspruch 4, dadurch gekennzeichnet, daß hinter dem Eingangsbereich des Speisers eine Anzahl von Elektroden angeordnet ist, die parallel geschaltet mit der Sekundärseite eines Transformators verbunden sind.

6. Einrichtung nach Anspruch 4 oder 5, dadurch gekennzeichnet, daß mindestens vor dem und am Auslaß des Speisers eine Anzahl von paarweise angeordneten Kontakten vorhanden ist, die an dem Feuerfestmaterial des Speisers anliegen, wobei jedes Kontaktpaar mit der Sekundärseite eines Transformators leitend verbunden ist.

## Revendications

1. Procédé pour le chauffage uniforme d'un courant de verre dans un canal d'alimentation d'un four de verrerie dans lequel l'énergie est appliquée par des électrodes plongeant dans le bain de verre et la température du courant de verre est mesurée en continu, caractérisé en ce que le courant circulant entre des paires d'électrodes qui coopèrent est maintenu constant, indépendamment de la résistance fournie par le bain de verre, par réglage de la tension, tant que la température du courant de verre ne s'écarte pas, d'une valeur préalablement déterminée, d'une valeur de consigne, et qu'après dépassement de l'écart admissible le flux de courant d'au moins un certain nombre de paires d'électrodes disposées à l'entrée du canal d'alimentation est réglé pour la compensation de l'écart de température, cependant que l'amenée de courant à ces paires d'électrodes réglables a lieu dans un rapport mutuel fixe qui n'est pas modifié même pendant une phase de réglage.

2. Procédé suivant la revendication 1, caractérisé en ce que le flux de courant des électrodes disposées derrière l'entrée du canal d'alimentation est réglé en commun en fonction de la température souhaitée.

3. Procédé suivant la revendication 1 ou 2, caractérisé en ce qu'au moins avant et au niveau de la sortie du canal d'alimentation du courant électrique est introduit dans le matériau réfractaire du canal d'alimentation et circule dans celui-ci.

4. Dispositif pour la mise en oeuvre du procédé suivant les revendications 1 et 3, comportant des électrodes qui traversent la paroi du canal d'alimentation des deux côtés, et sont reliées de façon conductrice à des enroulements de transformateurs, et des éléments de mesure de température pour la détermination de la température du courant de verre au moins dans la région d'entrée du canal d'alimentation, caractérisé en ce que les électrodes de chaque paire sont reliées, au moins dans la région d'entrée du canal d'alimentation, à la sortie de l'enroulement secondaire d'un transformateur réglable, cependant que les tensions des transformateurs d'un certain nombre de paires d'électrodes viosines présentent entre elles un rapport fixe qui n'est pas modifié même dans la phase de réglage et que, côté primaire, un dispositif de réglage de courant est relié à chaque transformateur.

5. Dispositif suivant la revendication 4, caractérisé en ce que derrière la région d'entrée du canal d'alimentation est disposé un certain nombre d'électrodes qui sont reliées au côté secondaire d'un transformateur en étant branchées en parallèle.

6. Dispositif suivant la revendication 4 ou 5, caractérisé en ce qu'au moins avant et au niveau de la sortie du canal d'alimentation il est prévu un certain nombre de contacts disposés par paires qui sont appuyés contre le matériau réfractaire du canal d'alimentation cependant que chaque paire de contacts est reliée du façon conductrice au côté secondaire d'un transformateur.

Claims

1. A method of uniformly heating a glass stream within a feeder of a glass melting furnace, wherein energy is supplied by electrodes immersed into the glass bath, and the temperature of the glass stream is measured continuously, characterized in that the current flowing between cooperating electrode pairs is kept constant irrespective of the resistance caused by the glass bath by controlling the voltage, as long as the temperature of the glass stream does not deviate from a set value by a predetermined degree, and that the current flow of at least a number of electrode pairs disposed at the feeder inlet is controlled for compensation of the temperature deviation after the tolerable deviation has been exceeded, with the power supply to these controllable electrode pairs taking place with a fixed ratio relative to each other, which is not varied even during a control phase or cycle.

2. The method according to claim 1, characterized in that the current flow of electrodes disposed downstream of the feeder inlet is commonly controlled in accordance with the desired temperature.

3. The method according to claims 1 or 2, characterized in that electric current is introduced into the refractory material of the feeder to flow through this material, at least upstream of and at the outlet of the feeder.

4. A system for carrying out the method according to claims 1 to 3, comprising electrodes which pass through the opposite walls of the feeder in pairs and which are conductively connected to windings of transformers, and temperature detecting elements for detecting the temperature of the glass stream at least in the inlet portion of the feeder, characterized in that the electrodes of each pair are each connected at least in the inlet portion of the feeder, to the output of the secondary windings of a variable transformer, with the voltages of the transformers of a number of adjacent electrode pairs having a fixed mutual ratio which is not varied even in the control phase or cycle, and that a current regulator is connected to the primary side of each transformer.

5. The system according to claim 4, characterized in that a plurality of electrodes are positioned downstream of the inlet portion of the feeder, which electrodes are connected to the secondary side of a transformer in parallel connection.

6. The system according to claim 4 or 5, characterized in that a plurality of paired contacts are provided at least upstream of and at the outlet of the feeder, which contacts contact the refractory material of the feeder, with each contact pair being conductively connected to the secondary side of one transformer.

Fig. 1

Temperatur-regler

Stromregler

1

2

Temperatur Meßelement

Fig. 2

Stelltransformator
mit Regelmöglichkeit

Elektroden

Speiser

Fig. 3

0 024 463